Europäisches Patentamt

European Patent Office

Office européen des brevets

(19)

(11) **EP 0 884 550 A2**

(12) # EUROPEAN PATENT APPLICATION

(43) Date of publication:
**16.12.1998 Bulletin 1998/51**

(51) Int Cl.6: **F28F 13/00, F28F 21/04, F28D 7/10, F02C 7/08**

(21) Application number: **98304682.2**

(22) Date of filing: **12.06.1998**

(84) Designated Contracting States:
**AT BE CH CY DE DK ES FI FR GB GR IE IT LI LU MC NL PT SE**
Designated Extension States:
**AL LT LV MK RO SI**

(30) Priority: **13.06.1997 JP 171256/97**
    **13.06.1997 JP 171257/97**

(71) Applicant: **ISUZU CERAMICS RESEARCH INSTITUTE CO., LTD.**
    **Fujisawa-shi, Kanagawa-ken (JP)**

(72) Inventor: **Kawamura, Hideo**
    **Kouza-gun, Kanagawa-ken, 253-0105 (JP)**

(74) Representative: **Jenkins, Peter David et al**
    **PAGE WHITE & FARRER**
    **54 Doughty Street**
    **London WC1N 2LS (GB)**

(54) **Heat exchanger, heat exchange apparatus comprising the same, and heat exchange apparatus-carrying gas engine**

(57)     This heat exchanger is formed of partition walls (33) in the casings(7) provided in an exhaust passage (8), fluid passages(36), in which the water or steam flows, formed on the inner side of the partition walls(33), and an exhaust gas passage(29), in which an exhaust gas flows, formed on the outer side of the partition walls (33). The porous ceramic members(38, 42) provided in the fluid passages(36) and exhaust gas passage(29) contain therein reinforcing members(39) obtained by mixing a fibrous material in a ceramic material. A gas engine(1) in which heat exchangers(4, 6) are incorporated in an exhaust passage(8) is provided with a turbocharger(3)-carrying energy recovery unit installed in the exhaust passage(8) to which an exhaust gas from the combustion chambers(1A, 1B) is discharged. The energy recovery unit comprises a pair of heat exchangers(4, 6) provided on the downstream side of the turbocharger (3), and a generator(20)-carrying stream turbine(5) driven by the steam occurring in the heat exchanger(4) and provided in an upstream side portion of the exhaust passage(8).

## F I G. 1

EP 0 884 550 A2

## Description

This invention relates to a heat exchanger provided in an exhaust passage so as to recover the thermal energy of an exhaust gas discharged from combustion chambers, a heat exchange apparatus provided with at least a pair of such heat exchangers, and a gas engine provided with such a heat exchange apparatus in an exhaust passage.

A conventional turbocharger-carrying heat insulating engine is provided with a turbine- and compressor-carrying turbocharger in a first stage of an exhaust system, and an energy recovery unit which comprises a generator-carrying turbine on the downstream side of the turbocharger. In such a heat insulating engine, each combustion chamber is formed to a heat insulating structure. The thermal energy of an exhaust gas discharged from the combustion chambers is recovered as electric power by the turbocharger and energy recovery unit, or by carrying out a supercharging operation by driving the compressor in the turbocharger.

The energy recovery systems adapted to prevent a decrease in an exhaust gas energy recovery efficiency for such a heat insulating engine include a recovery system disclosed in Japanese Patent Laid-Open No. 179972/1993. This energy recovery system has an energy recovery unit provided with a first turbine installed in an exhaust passage, and a generator operated by the first turbine; a turbocharger provided with a second turbine connected to an outlet side passage of the first turbine, and a supercharging compressor operated by the second turbine; and a waist gate provided in the outlet side passage of the first turbine.

In a cogeneration system, power is taken out as electric energy by a generator, and the water is heated with the electric power recovered from the thermal energy of an exhaust gas and a heat exchanger provided in an exhaust passage to turn same into hot water, which is utilized as hot water supply. Such a cogeneration system is subjected to a rated operation, and has a small load change, it being expected to be utilized as a power supply system in urban and mountainous areas.

Such cogeneration systems include a cogeneration system disclosed in Japanese Patent Laid-Open No. 33707/1994. In this cogeneration system, steam is generated with the exhaust gas energy, and the steam energy is recovered as electric energy, whereby a thermal efficiency is improved, a turbocharger being driven by the energy of an exhaust gas from an insulating gas engine, a generator-carrying energy recovery unit being driven by the exhaust gas energy from the turbocharger. The thermal energy of an exhaust gas from the energy recovery unit is converted into steam in a first stage exchanger, and a steam turbine is driven by this steam, whereby the thermal energy is recovered as electric energy. The hot water is generated by the high-temperature steam from the steam turbine in a second-stage heat exchanger, and is utilized as hot water supply.

In order to obtain a generated output with a high efficiency by an engine using a natural gas as a fuel, combining a certain number of systems is effective. Since a natural gas is difficult to be burnt, it is preferable to form each combustion chamber to a heat insulating structure and carry out the combustion of the gas excellently, and form the portions, which an exhaust gas discharged from the combustion chamber contacts, to heat insulating structures as well by using a material, such as a ceramic material. In this type of heat insulating engine, forming the combustion chambers to heat insulating structures, providing a turbocharger, and effectively recovering the pressure of an exhaust gas discharged from the combustion chambers are conceivable. In addition, recovering the thermal energy by a heat exchanger irrespective of the pressure of the exhaust gas discharged from the combustion chamber is also conceivable. However, since the exhaust gas is a gaseous body, the recovering of thermal energy from a gaseous body requires that a heat exchange portion of the heat exchanger be formed to have a large surface area.

The inventor of the present invention developed a heat exchanger using a porous ceramic material, and filed previously as Japanese Patent Application No. 118657/1997. As described in the specification in this patent application, a heat transfer quantity Q in a process for transferring heat between materials is expressed by the following equation.

$$Q=K \cdot As(T_G-T_S) \cdot t$$

wherein K represents a coefficient of overall heat transmission, $A_S$ an average area of a heat transfer path, $T_G$ the temperature of a high-temperature gas, $T_S$ the temperature of a low-temperature medium, and $\underline{t}$ a heat transfer period.

The coefficient of overall heat transmission K(kcal/m²h°C) is expressed by the following equation.

$$K=1/(X_1+X_2+X_3)$$

wherein $X_1=(1/\alpha_g)x(A_S/A_1)$, $X_2=(\delta_1/\lambda_1)x(A_S/A_2)$, $X_3=(1/\alpha_C)\times(A_S/A_3)$, $\alpha_g$: a heat transfer coefficient of a high-temperature gas, $\lambda_1$: heat conductivity, $\alpha_C$: a heat transfer coefficient of a low-temperature portion, $A_1$, $A_2$, $A_3$: contact surface areas of heat transfer members, and $\delta_1$: the thickness of a wall.

When values are substituted for the heat transfer coefficient of an exhaust gas, the heat conductivity of a heat exchanger and the heat transfer coefficient of the steam in the above equation, it is understood that the contribution rates of the heat transfer coefficient of the exhaust gas and the heat transfer coefficient of dry steam greatly dominate a value of the coefficient of overall heat transmission K. In order to reduce the values influencing that of the coefficient of overall heat transmission K, it is necessary to reduce the contribution rates by increasing the values of $A_1$ and $A_3$. Regarding the materials constituting the heat exchanger, it is necessary to reduce the heat conductivity and provide excellent exhaust gas resisting characteristics.

An aim of the present invention is to provide a heat exchange apparatus comprising series-arranged heat exchangers in an exhaust passage which is provided therein with porous ceramic members in view of the above-mentioned inconveniences so as to recover the thermal energy of an exhaust gas discharged from combustion chambers, whereby the area of a surface which fluids, such as exhaust gas and steam contact is increased; and which is reinforced at the porous ceramic members with a fibrous material so as to increase the strength of the exhaust passage.

Another aim of the present invention is to provide a ceramic engine the thermal efficiency of which is improved by generating high-temperature steam by such a heat exchange apparatus as mentioned above, recovering the steam energy as steam pressure, driving a steam turbine by the high-temperature steam and converting the steam energy into electric energy, and effectively recovering the thermal energy of an exhaust gas.

The present invention relates to a heat exchanger comprising casings incorporated in an exhaust passage in which an exhaust gas flows, partition walls arranged in the casings, a lower-temperature side passage, in which a low-temperature fluid flows, formed on the inner side of the partition walls, and a high-temperature side passage, in which the high-temperature exhaust gas flows, formed in the portions of the casings which are on the outer side of the partition walls, the fluid being heated with the exhaust gas, porous ceramic members being provided in the low-temperature side passage and high-temperature side passage, reinforcing members formed by mixing a fibrous material in a ceramic material being arranged in the porous ceramic members.

The reinforcing members comprise a plurality of fins extending radially from the inner and outer surfaces of the partition walls into the porous ceramic members. Each of the reinforcing members comprises a core portion of silicon carbide fibers or carbon fibers, and an outer portion of silicon carbide.

The reinforcing members provided in the high-temperature side passage in which an exhaust gas flows comprise core portions of nonwoven cloths of carbon fibers, and $Si_3N_4$ layers formed by spreading a slurry, which is obtained by mixing Si powder with carbon powder, into the core portions, coating the surfaces of the core portions with the slurry, and sintering the resultant products in a $N_2$ gas at a temperature of around 1500°C-1700°C so as to convert the slurry into $Si_3N_4$, the carbon fibers in the core portions being coated with the $Si_3N_4$ layers.

In another example, the reinforcing members constituting the high-temperature side passage in which the exhaust gas flows comprise a composite material containing carbon fibers and silicon nitride, and the surface of the composite material is coated with silicon carbide.

The porous ceramic members comprise silicon nitride, and the surface of the silicon nitride is coated with silicon carbide. Especially, the porous ceramic members arranged in the low-temperature side passage in which the water and steam constituting the fluid flows comprise silicon carbide or silicon nitride coated with silicon carbide. The porous ceramic members arranged in the high-temperature side passage in which the exhaust gas flows comprise silicon nitride. Therefore, since the carbon fibers are coated with SiC, they do not contact the oxygen, and, since the carbon fibers are not oxidized, the strength thereof can be secured for a long period of time. Since the fibers of $Si_3N_4$ are coated with SiC, the recrystallization does not occur among the particles even when the temperature thereof becomes high, so that the strength of these fibers does not lower.

The partition walls among which the exhaust gas flows comprise wall core portions of nonwoven cloths of carbon fibers, and silicon nitride formed by spreading a slurry, which is obtained by mixing Si powder with carbon powder, into the wall core portions, coating the surfaces of the wall core portions with the slurry, and sintering the resultant products in a $N_2$ gas at a temperature of around 1500°C-1700°C so as to convert the slurry into silicon nitride, the carbon fibers being coated with the silicon nitride.

The present invention also relates to a heat exchange apparatus provided with a first stage heat exchanger installed in an exhaust passage from which an exhaust gas is discharged, and adapted to heat steam with the exhaust gas, and a second stage heat exchanger installed in the portion of the exhaust passage which is on the downstream side of the first stage heat exchanger, and adapted to heat the water with the exhaust gas from the first stage heat exchanger and turn the same into steam, the first stage heat exchanger comprising a steam passage provided in a first casing and provided with first porous ceramic members, and a first exhaust passage, in which the exhaust gas flows, provided in the steam passage, the steam heated in the second stage heat exchanger flowing in the steam passage, the second stage heat exchanger comprising a water-steam passage provided in a second casing formed adjacently to the first casing, and capable of storing water therein, and a second exhaust gas passage formed around the water-steam passage and provided with second porous ceramic members therein, the exhaust gas discharged from the first stage heat exchanger flowing in the second exhaust gas passage.

The steam passage and water-steam passage are provided therein with porous ceramic members respectively. In other words, the tubular bodies forming the first and second casings, first and second exhaust gas passages, steam passage and water and steam passage are formed out of a ceramic material comprising SiC or AlN which has a high heat conductivity.

The second stage heat exchanger is provided on the lower side of the first stage heat exchanger, and the water-steam passage in the second stage heat exchanger extends vertically, the heat exchange area of the steam passage in the first stage heat exchanger being set large, the heat exchange area of the water-steam passage in the second stage heat exchanger being set small, the water being stored in a lower portion of the interior of the water-steam passage.

In the first stage heat exchanger, the relation between the exhaust gas contacting surface area of the first exhaust gas passage and the outer surface area of a tubular body constituting the first exhaust gas passage satisfies the following equation.

$$A_1:A_2=(1/\alpha_g):(\delta_1/\lambda_1)$$

wherein $A_1$ represents an exhaust gas contacting surface area, $A_2$ an outer surface area of a tubular body forming the exhaust gas passage, $\alpha_g$ a heat transfer coefficient of an exhaust gas, $\delta_1$ the thickness of the tubular body forming the exhaust gas passage, and $\lambda_1$ the heat conductivity of the material of the first stage heat exchanger.

As mentioned previously, the coefficient of overall heat transmission $K=1/(X_1+X_2+X_3)$, wherein:

$$X_1=(1/\alpha_g)\times(A_S/A_1)$$

$$X_2=(\delta_1/\lambda_1)\times(A_S/A_2)$$

$$X_3=(1/\alpha_C)\times(A_S/A_3)$$

Calculations are then made with the heat transfer coefficient of the high-temperature gas and that of a solid substituted for the corresponding members of the equation.

An average surface area of a heat transfer path As shall be set to 1 as a unit area. $\alpha_g$=130 kcal/m$^2$h°C. When a silicon nitride member is used as a solid, $\lambda_1$=3.6 kcal/m$^2$h°C. Accordingly, judging from these values, the controlling of $X_1$, $X_2$, and $X_3$ is discussed in accordance with $K=1/(X_1+X_2+X_3)$ having the smallest value, to discover that reducing the values of the terms of $X_1$ and $X_2$ by changing the area greatly is the most effective. For example, in order to reduce the value of $X_1$ to a level substantially equal to that of the value of $X_2$, the area of $A_1$ in $X_1$ may be increased around 15 times.

Therefore, $X_1=X_2$.

$$(1/\alpha_g)\times(1/A_1)=(\delta_1/\lambda_1)\times(1/A_2)$$

Accordingly, $A_1:A_2=(1/\alpha_g):(\delta_1/\lambda_1)$.

In the second stage heat exchanger, the relation between the exhaust gas contacting surface area of the second exhaust gas passage and the outer surface area of a tubular body constituting the water-steam passage satisfies the following equation.

$$A_3:A_4=(1/\alpha_C):(\delta_2/\lambda_2)$$

wherein $A_3$ represents an exhaust gas contacting surface area, $A_4$ an outer surface area of a tubular body constituting the water-steam passage, $\alpha_C$ the heat transfer coefficient of the steam, $\delta_2$ the thickness of the tubular body constituting the water-steam passage, and $\lambda_2$ the heat conductivity of the material of the second stage heat exchanger.

When $\delta_1$ and $\lambda_1$ are substituted for $\delta_2$ and $\lambda_2$ respectively in the above equation because of the different heat exchanger, $X_2=X_3$ in the same manner as in the previous case.

$$(\delta_1/\lambda_1)\times(1/A_4)=(1/\alpha_C)\times(1/A_3)$$

Therefore, $A_3:A_4=(1/\alpha_C):(\delta_2/\lambda_2)$.

Each casing and a tubular body forming each of the passages are formed out of a ceramic material of a low heat conductivity, such as SiC or AlN.

The high-temperature steam generated by the first stage heat exchanger drives a steam turbine, and is converted into electric energy by a generator provided in the steam turbine.

As described above, this heat exchange apparatus is formed compactly of a two-stage heat exchanger, and capable of increasing the enthalpy of steam. Especially, in the first stage heat exchanger, the exhaust gas has a high temperature, and the heat transfer in the heat exchange between the exhaust gas and steam is carried out sufficiently in the exhaust gas passage, in which the high-temperature exhaust gas flows, even when the exhaust pipe comprises a small-diameter pipe, so that the steam can be superheated suficiently. In the second stage heat exchanger, heat exchange between an exhust gas and water is carried out, and the heat transfer of the water is high, so that a structure in which the water-steam passage is provided in the central portion of the exhaust gas passage sufficiently permits the transfer of heat to be attained. Furthermore, it is possible that the heat exchange contacting surface area for the exhaust gas and steam and that for an exhaust gas and water be set properly, so that the heat exchange efficiency can be improved greatly.

This heat exchange apparatus is formed compactly of a two-stage heat exchanger as described above, and, especially, the heat exchange contacting surface areas for an exhaust gas and steam, and exhaust gas and water can be set properly. This enables the heat exchange efficiency to be improved greatly, the strength of the apparatus to be increased, and the durability thereof to become high. When this heat exchange apparatus is incorporated into a two-stage heat exchange apparatus, the thermal energy of the exhaust gas is heat exchanged with water by the first- and second-stage heat exchangers, and the water can be converted into high-temperature steam, the energy of the high-temperature steam being recovered as electric energy effectively by a steam turbine.

The present invention also relates to a gas engine provided with a heat exchange apparatus, comprising a fuel supply unit adapted to supply a gas fuel from a fuel tank to combustion chambers, a turbocharger-carrying energy recovery unit provided in an exhaust passage through which an exhaust gas from the combustion chambers is discharged, a first stage heat exchanger provided in the portion of the exhaust passage which is on the downstream side of the turbocharger, and adapted to heat steam with the exhaust gas, and a second stage heat exchanger provided in the portion of the exhaust passage which is on the downstream side of the first stage heat exchanger, and adapted to heat the water with the exhaust gas from the first stage heat exchanger and convert the same into steam.

The steam turbine driven by the high-temperature steam occurring in the first stage heat exchanger is adapted to generate power by a generator provided in the steam turbine. The second stage heat exchanger is adapted to heat the water with the exhaust gas passed through the first stage heat exchanger and convert the same into steam, which is then sent to the first stage heat exchanger in which it is heated to a higher temperature.

This gas engine is provided with the above heat exchange apparatus of a high heat exchange efficiency installed in the exhaust passage, and attains the recovery of energy by the heat exchange apapratus which does not require a high exhaust pressure. Since this engine is capable of reducing a loss by decreasing the back pressure, and recovering the exhaust heat energy effectively, the fuel consumption can be reduced.

In this gas engine, a turbocharger is driven by the heat energy of an exhaust gas, and the heat energy is recovered by a compressor and a generator, steam being generated by the first and second heat exchangers by using the exhaust gas discharged from a turbine in a turbocharger, a steam turbine being driven by the steam, whereby the heat energy can be recovered as electric energy by the generator. In the gas engine, the exhaust gas heat energy is thus recovered by a heat exchange apparatus instead of a conventional energy recovery turbine. Accordingly, a loss due to a back pressure occurring in a conventional gas engine does not occur, and the exhaust heat energy is recovered effectively, so that the fuel consumption can be reduced.

This gas engine is provided with the above heat exchange apparatus of a high heat exchange efficiency installed in the exhaust passage, and attains the recovery of energy by the heat exchange apparatus which does not require a high exhaust pressure. Since this engine is capable of reducing a loss by decreasing the back pressure, and recovering the exhaust heat energy effectively, the fuel consumption can be reduced.

Since this gas engine is formed as described above, the exhaust gas energy can be recovered effectively by the turbocharger, and first and second stage heat exchangers which are provided in the exhaust passage. In this heat exchange apparatus, the heat energy of the exhaust gas is subjected to heat exchange with water by the first stage heat exchanger and second stage heat exchanger which are formed in a two-stage structure, to enable the water to be converted into high-temperature steam, the energy of the high-temperature steam being recovered effectively as electric energy by the steam turbine.

In the gas engine, a turbocharger is driven by the heat energy of an exhaust gas, and this heat energy is recovered by a compressor and a generator. As described above, steam is generated by the exhaust gas, which is discharged from a turbine in the turbocharger, by the first stage heat exchanger and second stage heat exchanger, and a steam turbine is driven by this steam, the heat energy being able to be recovered as electric power by the generator. Accordingly, in a gas engine, the exhaust heat energy is recovered by a heat exchanger apparatus instead of an energy recovery turbine used in a conventional gas engine, so that a loss due to a back pressure encountered in a conventional gas turbine does not occur, whereby the exhaust gas heat energy is recovered effectively. This enables the fuel consumption to be reduced.

Embodiments of the present invention will now be described by way of example only, with reference to the accompanying drawings, in which:-

Fig. 1 is a sectional view showing an embodiment of the heat exchanger according to the present invention;
Fig. 2 is a sectional view of the heat exchanger taken along the line A-A in Fig. 1;
Fig. 3 is a sectional view showing an embodiment of the heat exchange apparatus in which a pair of heat exchangers are incorporated;
Fig. 4 is an explanatory view showing the gas engine provided with an energy recovery unit in which such a heat exchanger as is shown in Fig. 1 is incorporated;
Fig. 5 is an explanatory view showing a generator-motor-carrying turbocharger incorporated in the gas engine of Fig. 4; and
Fig. 6 is an explanatory view showing a steam turbine incorporated in the energy recovery unit provided in the gas engine of Fig. 4.

The embodiments of the heat exchanger, heat exchanger apparatus comprising such heat exchangers, and gas engine provided with such a heat exchange apparatus according to the present invention will now be described with reference to the drawings.

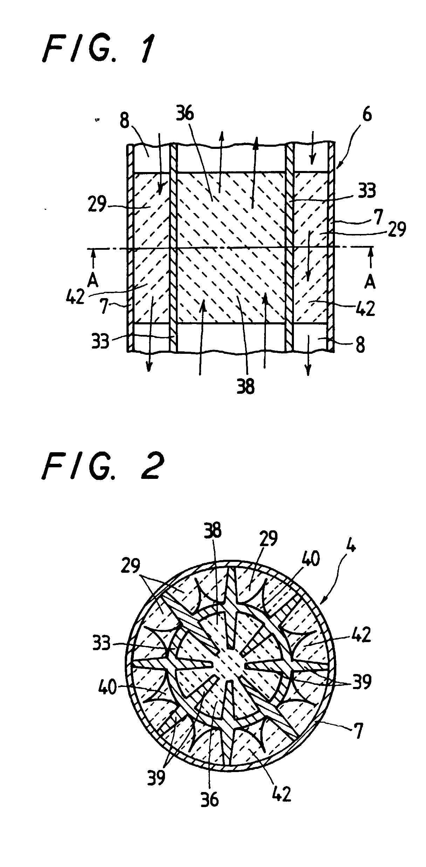

First, the heat exchanger according to the present invention will be described with reference to Figs. 1 and 2.

A heat exchanger 6 (second stage heat exchanger) is formed of a casing 7 (second casing) incorporated in an exhaust passage 8, a tubular body 33 provided in the casing 7 and constituting partition walls, a water-steam passage 36 formed in the tubular body 33 and constituting a low-temperature side passage in which a low-temperature fluid flows, and an exhaust gas passage 29 which is formed in the portion of the interior of the casing 7 which is on the outer side of the tubular body 33, and which constitutes a high-temperature side passage in which a high-temperature gas flows. The water-steam passage 36 is provided with porous ceramic members 38 therein. The exhaust gas passage 29 is provided with porous ceramic members 42 therein. The porous ceramic members 38, 42 are provided therein with reinforcing members 39 formed by mixing a fibrous material in a ceramic material. The heat transfer portions 40 spread into the porous ceramic members 42 fulfil the function of receiving the heat energy sufficiently from the exhaust gas and heating the steam passing through the tubular body 33 and porous ceramic members 38.

The reinforcing members 39 are formed to a plurality of fin structures extending radially from the inner and outer surfaces of the tubular body 33, which forms the partition walls, into the porous ceramic members 38, 42. The reinforcing members 39 forming the high-temperature side passage 29, in which the exhaust gas flows, are formed out of a complex material containing carbon fibers and silicon nitride, and the surface of this complex material is coated with silicon carbide.

In the heat exchanger 6, the porous ceramic members 38 provided in the water-steam passage 36 constituting the low-temperature side passage in which water and steam flows are formed out of a complex material, wherein the core portions thereof comprises silicon nitride, the surface of the silicon nitride portions being coated with silicon carbide. In another example, the porous ceramic members 38 are formed out of silicon nitride. The porous ceramic members 42 are formed out of a ceramic material, such as silicon nitride and silicon carbide.

The heat exchanger 6 can be manufactured as follows. The tubular body 33 forming the partition walls is molded at its partition wall core portions cylindrically by using nonwoven cloths of carbon fibers, and a slurry obtained by mixing Si powder with carbon powder is spreading into the partition wall core portions, the surfaces of these core portions being coated with the same slurry. The partition wall poritons with the slurry spreading thereinto and also coated at the surfaces thereof with the same slurry are then sintered in $N_2$ gas at a temperature of around 1500°-1700°C. Consequently, the slurry of Si powder and carbon generates a reaction and is converted into $Si_3N_4$, so that the quantity of the carbon fibers in the partition wall core portions increases. Thus, carbon fibers remain in the partition wall core portions.

Accordingly, the tubular body 33 of a structure in which the carbon fibers constituting the partition wall core portions are coated with their outer portion-forming $Si_3N_4$ so as to keep the surfaces of the carbon fiber poritons not exposed to the outside can be produced. Moreover, the surfaces, along which the water or steam flows, of the partition walls contains a slurry of SiC injected thereinto, and the partition walls are then sintered, the surfaces of the $Si_3N_4$ being coated with SiC. The partition wall core partions are thus formed to a structure preventing the silicon nitride from being corroded.

In another method, partition wall core portions on the basis of which the partition walls 33 are made are formed to a cylindrical molded body by winding SiC fibers circularly, and the SiC fibers are then bent into a bellows type structure, which is put on the cylindrical molded body. The resultant product is set in a mold. A slurry of SiC is then injected into the set product, which is thereafter sintered, and the SiC fibers forming the partition wall core portions are coated with silicon carbide which is to form an outer portions of the partition walls. Thus, the tubular body 33 of a structure with the SiC fiber portions not exposed to the outside can be formed.

The reinforcing members 39 comprise central portions of carbon fibers, and outer portions of silicon carbide. The structures of the reinforcing members 39 comprising the central portions and outer portions can be manufactured, for example, in the following manner.

First, nonwoven cloths of carbon fiber are molded into core portions, into which a slurry obtained by mixing Si powder and carbon powder with each other is spread, and the surfaces of the core portions are coated with such a slurry as mentioned above. The resultant products are sintered in a $N_2$ gas at a temperature of around 1500°-1700°C. Consequently, the slurry of Si powder and carbon generates a reaction, and is converted into $Si_3N_4$, and the quantity of carbon fibers in the core portions increases, so that carbon fibers remain in the core portions.

Therefore, reinforcing members 39 of structures in which the carbon fibers of the core portions of the reinforcing members 39 are coated with silicon nitride constituting the outer portions of the same members with the carbon fibers not exposed to the outer side thereof can be formed. Thus, the carbon fibers of the core portions can be formed to structures in which they are coated with silicon nitride which is obtained by converting the mentinoed slurry thereinto, and which constitutes the outer portion of the core portions, can be formed. Moreover, a slurry of SiC is injected into the reinforcing members 39 positioned in the water-steam passage 36, and the resultant products are sintered, whereby the surfaces of $Si_3N_4$ are coated with SiC, materials of improved corrosion resistance being thus manufactured.

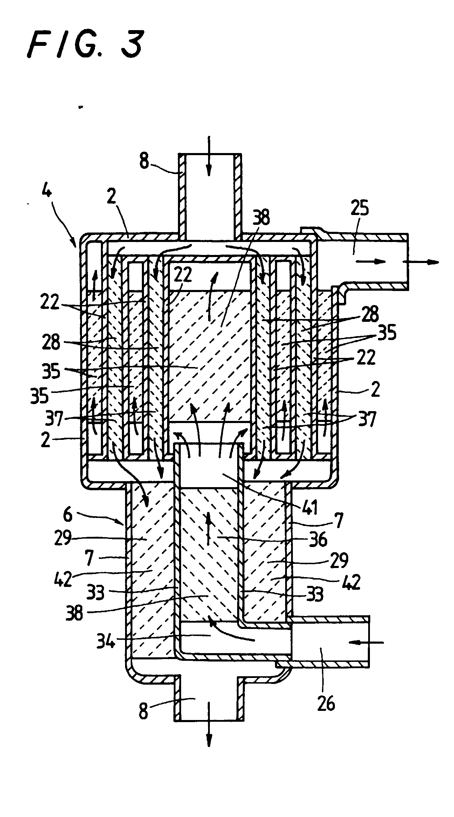

An embodiment of the heat exchange apparatus according to the present invention will now be described with reference to Fig. 3.

This heat exchange apparatus has such a heat exchanger 6 (second stage heat exchanger) as mentioned above incorporated therein, and comprises a heat exchanger 4 (first stage heat exchanger) adapted to heat steam with an exhaust gas from an engine and provided in an exhaust passage 8, and the heat exchanger 6 provided in the portion of the exhaust passage 8 which is on the downstream side of the heat exchanger 4, and adapted to heat water with the exhaust gas from the heat exchanger 4 and convert the same into steam.

The heat exchanger 4 comprises steam passages 35 in which the steam heated by the heat exchanger 6 provided in a casing 2 (first casing) flows, and tubular bodies 22 forming a plurality of exhaust gas passages 28, in which an exhaust gas flows, provided in the steam passages 35. Porous ceramic members 37 are provided in the exhaust gas passages 28. Porous ceramic members 38 are provided in the steam passages 35. The heat exchanger 6 has the above-described structure.

Referring to Fig. 3, the heat exchanger 6 is provided on the lower side of the heat exchanger 4. A tubular body 33 forming a water-steam passage 36 in the heat exchanger 6 is provided vertically. The water is stored in a lower portion 34 of the tubular body 33 forming a partition wall defining the steam passage 36. The casing 2, 7, tubular bodies 22 forming the exhaust gas passages 28 and tubular body 33 forming the water-steam passage 36 are formed out of a ceramic material, such as SiC or AlN which has a high heat conductivity.

In the heat exchanger 4, the heat transfer coefficient of the steam sent from the heat exchanger 6 thereto is low. Therefore, the heat exchange contact area of the steam, i.e. the heat exchange contact surface area of the steam passages 35 formed of porous members is set large, while the heat exchange contact area of the exhaust gas, i.e. the heat exchange contact surface area of the exhaust gas passages 28 is set small.

In the heat exchanger 6, water is placed in the partition wall defining therein the water-steam passage 36 and having a small area, i.e. tubular body 33. Since the heat transfer coefficient of the water and wet steam $H_2O$ is high, the heat exchange contact area of the water and wet steam, i.e. the heat exchange contact surface area of the water-steam passage 36 may be small. A passage, in which the exhaust gas flows, formed on the outer side of the partition walls, i.e. tubular bodies 33 comprises an exhaust gas passage 29, which is set to a large contact surface area with respect to the exhaust gas.

The porous ceramic members 37, 42 provided in the exhaust gas passages 28, 29 are formed out of a ceramic material, such as SiC and $Si_3N_4$.

The porous ceramic members 38 provided in the steam passage 35 and water-steam passage 36 are formed out of a ceramic material, such as SiC and $Si_3N_4$ coated with SiC.

The casings 2, 7, tubular bodies 22 forming the exhaust gas passages 28, and tubular body 33 forming the water-steam passage 36 are formed out of a ceramic material of a low heat conductivity, such as SiC and AlN.

The heat exchanger 4 is formed so that the relation between the steam contacting surface area of the steam passages 35 and the outer surface area of the tubular bodies which form the exhaust gas passages 28 satisfies the following equation.

$$A_1:A_2=(1/\alpha_g):(\delta_1/\lambda_1)$$

wherein $A_1$ represents an exhaust gas contacting surface area, $A_2$ an outer surface area of the tubular bodies 22 forming the exhaust gas passages 28, $\alpha_g$ a heat transfer coefficient of an exhaust gas, $\delta_1$ the thickness of the tubular bodies forming the exhaust gas passages 28, and $\lambda_1$ the heat conductivity of the material of the heat exchanger 4.

The heat exchanger 6 is formed so that the relation between the exhaust gas contacting surface area of the exhaust gas passages 29 in which porous ceramic members are provided and the outer surface area of the tubular body 33 forming the water-steam passage 36 satisfies the following equation.

$$A_3:A_4=(1/\alpha_c):(\delta_2/\lambda_2)$$

wherein $A_3$ represents an exhaust gas contacting surface area, $A_4$ an outer surface area of the tubular body 33 forming the water-steam passage 36, $\alpha_c$ a heat transfer coefficient of steam, $\delta_2$ the thickness of the tubular body 33 forming the water-steam passages 36, and $\lambda_2$ the heat conductivity of the material of the second heat exchanger.

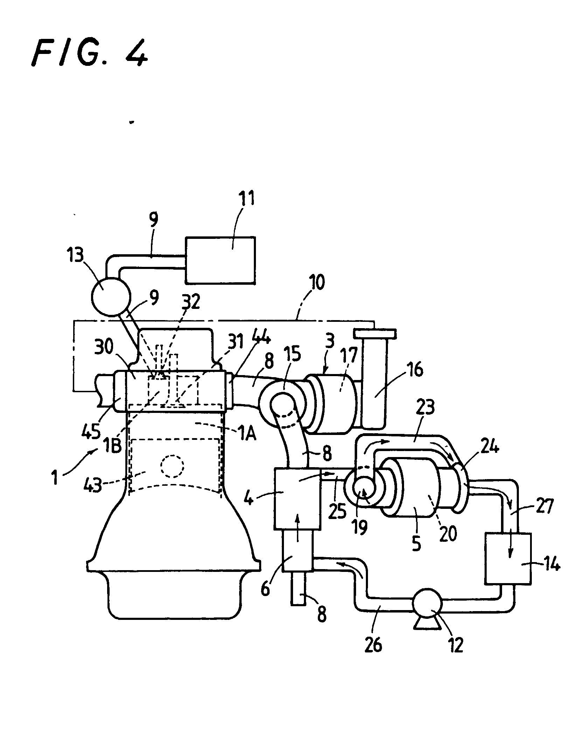

A gas engine provided with an energy recovery unit in which the above-described heat exchange apparatus is incorporated will now be described with reference to Figs. 3 to 6.

The heat exchangers 4, 6 are incorporated in an energy recovery unit, and positioned on the downstream side of a turbocharger 3 provided in an exhaust passage 8 into which an exhaust gas from an engine 1 is discharged. The energy recovery unit is used to drive a steam turbine 5 by the high-temperature steam generated in the heat exchange apparatus, and generate power by a generator 20 provided in the steam turbine 5. The energy recovery unit is provided with a heat exchanger 6 on the downstream side of the heat exchanger 4, and the heat exchanger 6 is adapted to heat water with the exhaust gas passed through the heat exchanger 4, convert the water into steam, and sent the steam to the heat exchanger 4.

The gas engine 1 is a multicylinder or single cylinder engine operated by sequentially repeating four strokes, i.e. a suction stroke, a compression stroke, an expansion stroke and an exhaust stroke, and can be applied to an engine 1 of small load fluctuation in a stationary cogeneration system or to a vehicular engine.

The gas engine 1 is a single cylinder or multicylinder engine using a gas, such as a natural gas as a fuel and capable of being applied to, for example, a cogeneration system, and it constitutes a prechamber type gas engine comprising a main chamber 1A in which a combustion chamber is formed in a cylinder, and a prechamber 1B communicating with the main chamber 1A through a communication port and formed in a cylinder head 30.

The gas engine 1 is provided with an exhaust manifold 44 for discharging an exhaust gas from the main chamber 1A of the combustion chamber, and a suction manifold 45 for supplying suction air to the main chamber 1A through a suction passage 10. The suction air from the suction passage 10 is supplied to the main chamber 1A in each cylinder through the suction manifold 45, while the exhaust gas from each main chamber 1A prechamber 1B is put together in the exhaust manifold 44 and discharged to the exhaust passage 8. A gas fuel comprising a natural gas is supplied from a fuel tank 11 to each prechamber 1B of combustion chambers through fuel supply passages 9 by an operation of a fuel pressurization pump 13.

The main and prechambers 1A, 1B constituting a combustion chamber are formed to heat insulating structures by ceramic members and heat insulating layers. The gas engine 1 is provided with a prechamber 1B, into which a reformed fuel is supplied, formed in the cylinder head 30, and the prechamber 1B is formed so as to communicate with the main chamber 1A when the communication port is opened by a control valve 31. The compressed air from a compressor 16 in the turbocharger 3 is supplied to the main chamber 1A through the suction passage 10. The prechamber 1B is provided with a fuel valve 32, and a gas fuel is supplied from a fuel supply passage 9 to the prechamber 1B when the fuel supply port is opened by the fuel valve 32.

The gas engine 1 has a fuel tank 11 holding a natural gas fuel, a fuel pressurization pump 13 for supplying the gas fuel to the prechamber 1B of a combustion chamber, a heat exchanger 4 provided in the portion of an exhaust passage 8 which is on the upstream side of a turbocharger 3, a steam turbine 5 driven by the steam generated by the heat exchanger 4, and a heat exchanger 6 provided on the downstream side of the heat-exchanger 4, adapted to convert a fluid (low-temperature steam and water) discharged from the steam turbine 5 into steam, and supplying the steam to the heat exchanger 4.

The main chamber 1A and prechamber 1B are formed to heat insulating structures by ceramic members and heat insulating layers, and the exhaust gas discharged from the main chamber 1A and through the exhaust manifold is a high-temperature gas of around 900°-800°C. The gas engine 1 is formed so that the heat energy of the exhaust gas is recovered by the turbocharger 3, and heat exchangers 4, 6.

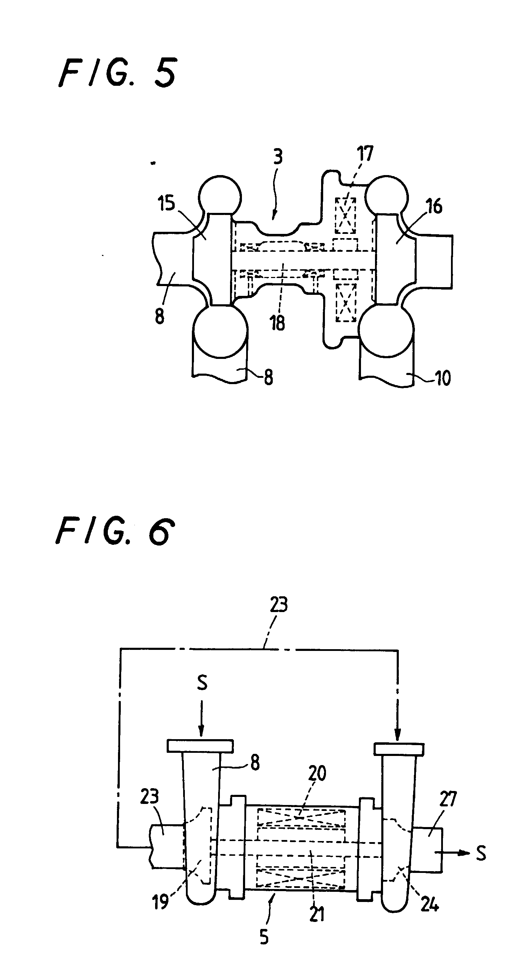

As shown in Fig. 5, the turbocharger 3 comprises a turbine 15 driven by an exhaust gas, a compressor 16 connected to the turbine 15 via a shaft 18 and driven by the turbine 15, and a generator-motor 17 provided on the shaft 18. The compressor 16 is driven by the turbine 15, pressurizes the air into compressed air, and supplies the compressed air from the suction manifold 45 to the main chamber 1A in each cylinder through the suction passage 10. The generator-motor 17 is capable of taking out the rotational force of the turbine 15 as electric power, and thereby recovering the exhaust gas energy as electric energy.

The heat exchanger 4 comprises a steam passage 35, in which the steam heated by the heat exchanger 6 provided in the casing 2, formed of a porous ceramic member 38, and a plurality of exhaust gas passages 28, in which an exhaust gas flows, provided in the steam passages 35. The heat exchanger 6 comprises a water-steam passage 36 which is provided in the second casing 7 provided adjacently to the casing 2, and which is capable of storing water therein, and an exhaust gas passage 29, in which the exhaust gas from the heat exchanger 4 flows, provided around the water-steam passage 36.

As shown in Fig. 6, the steam turbine 5 comprises a turbine 19 driven by the steam generated in the heat exchanger 4, a turbine 24 adapted to receive the steam, which is discharged from the turbine 19, through a passage 23, and driven by the same steam, and a generator 20 provided on the shaft 20 which connects the turbines 19, 24 together. Therefore, the steam energy drives the turbines 19, 24, the rotational force of which is recovered as electric power by the generator 20.

The heat exchanger 6 provided in the exhaust passage 8 is a gas-liquid phase heat exchanger adapted to generate steam by the exhaust gas energy, the steam being sent to the heat exchanger 4 through a steam passage 41. The steam which has driven the steam turbine 5 turns into a fluid of a mixture of water and steam, which is discharged to a condenser 14 through a fluid passage 27, and the fluid turns into high-temperature water in the condenser 14 and is sent to the heat exchanger 6 through a water passage 26 by a water pump 12. The exhaust gas which has passed through the heat exchanger 6 turns into a low-temperature gas (of, for example, around 200°C) from which the heat energy has been recovered substantially wholly, this exhaust gas being discharged to the outside.

The gas engine is formed as described above, and operated in the following manner.

When a suction valve (not shown) is opened with the control valve 31 closed, the air from the compressor 16 in the turbocharger 3 is supplied from the suction manifold 44 to the main chamber 1A through the suction passage 10. The air in the main chamber 1A is compressed at a compression stroke with the control valve 31 closed. The fuel valve 32 is opened with the control valve 31 closed, and a natural gas fuel is supplied from the fuel tank 11 to the prechamber 1B through the fuel supply passage 9 by an operation of the fuel pressurization pump 13. The control valve 31 is opened in a position in the vicinity of the upper dead center of a compression stroke, and the compressed air in the main chamber 1A flows into the prechamber 1B the reformed fuel being mixed with the compressed air, ignited and burnt, the compression stroke transferring to an expansion stroke to make a piston 43 work.

The exhaust gas occurring in the main chamber 1A and prechamber 1B at an exhaust stroke is sent out to the turbocharger 3 through the exhaust passage 8. In the turbocharger 3, the turbine 15 is driven, and the rotational force thereof is converted into electric energy by the generator-motor 17 and drives the compressor 16. The electric power obtained in the generator-motor 17 is accumulated in a battery, and consumed to drive accessories. The compressor 16 also fulfils the function of supercharging the air to the combustion chamber through the suction passage 10. The exhaust gas which has passed through the turbine 15 in the turbocharger 3 is sent to the heat exchanger 4 through the exhaust passage 8.

The exhaust gas sent to the heat exchanger 4 is sent to the heat exchanger 6 through the exhaust gas passages 28. When the exhaust gas passes through the exhaust gas passage 28, it is subjected to heat exchange with the steam sent from the heat exchanger 6 to the steam passages 35 through the steam passage 41, whereby the steam is heated to a high temperature. The steam heated to a high temperature in the heat exchanger 4 is sent to the steam turbine 5 through the high-temperature steam passage 25, and drives the turbines 19, 24. Owing to the operations of the turbines 19, 24, the generator 20 generates electric power. The electric power generated by the generator 20 is accumulated in a battery, and consumed to drive the accessories. The high-temperature steam drives the steam turbine 5, and is converted into a fluid comprising low-temperature steam and water, which is sent to the condenser 14 through the fluid passage 27 and turned into water, this water being sent to the water-steam passage 36 in the heat exchanger 6 through the water passage 26 by the operation of a water pump 12.

The exhaust gas sent from the heat exchanger 4 to the heat exchanger 6 is sent out to the exhaust passage 8 through the exhaust gas passage 29 in the heat exchanger 6. When the exhaust gas passes through the exhaust gas passage 29, it is subjected to heat exchange with the water passing through the water-steam passage 36, and turns into steam. The exhaust gas sent out to the exhaust passage 8 has its heat energy recovered by the turbocharger 3 and heat exchangers 4, 6, and has its temperature decreased to as low as, for example, around 200°C.

## Claims

1. A heat exchange apparatus provided with a first stage heat exchanger(4) installed in an exhaust passage (8) from which an exhaust gas is discharged, and adapted to heat steam with the exhaust gas, and a second stage heat exchanger(6) installed in the portion of said exhaust passage(8) which is on the downstream side of said first stage heat exchanger(4), and adapted to heat the water with the exhaust gas from said first stage heat exchanger(4) and turn the same into steam, said first stage heat exchanger(4) comprising a steam passage (35) provided in a first casing(2) and provided with first porous ceramic members(38), and a first exhaust passage(28), in which the exhaust gas flows, provided in said steam passage(35), the steam heated in said second stage heat exchanger (6) flowing in said steam passage(35), said second stage heat exchanger(6) comprising a water-steam passage(36) provided in a second casing(7) formed adjacently to said first casing (2), and capable of storing water therein, and a second exhaust gas passage(29) formed around said water-steam passage(36) and provided with second porous ceramic members(42) therein, the exhaust gas discharged from said first stage heat exchanger(4) flowing in said second exhaust gas passage(29).

2. A heat exchange apparatus according to Claim 1, wherein said steam passage(35) and said water-steam passage(36) are provided therein with porous ceramic members(38) respectively.

3. A heat exchange apparatus according to Claim 1, wherein said second stage heat exchanger(6) is provided on the lower side of said first stage heat exchanger(4), said water-steam passage(36) in said second stage heat exchanger(6) extending vertically, the heat exchange area of said steam passage(35) in said first-stage heat exchanger(4) being set large, the heat exchange area of said water-steam passage(36) in said second stage heat exchanger(6) being set small, the water being stored in a lower portion of the interior of said water-steam passage(36).

4. A heat exchange apparatus according to Claim 1, wherein, in said first stage heat exchanger(4), the relation between the exhaust gas contacting surface area of said first exhaust gas passage(28) and the outer surface area of a tubular body(22) constituting said first exhaust gas passage(28) satisfies the following equation:

$$A_1 : A_2 = ( 1 / \alpha_g ) : ( \delta_1 / \lambda_1 )$$

wherein $A_1$ represents an exhaust gas contacting surface area, $A_2$ an outer surface area of said tubular body(22) forming said first exhaust gas passage(28), $\alpha_g$ a heat transfer coefficient of the exhaust gas, $\delta_1$ the thickness of said tabular body(22) forming said first exhaust passage(28), and $\lambda_1$ the heat conductivity of the material of said first stage heat exchanger(4).

5. A heat exchange apparatus according to Claim 1, wherein, in said second stage heat exchanger(6), the relation between the exhaust gas contacting surface area of said second exhaust gas passage (29) and the outer surface area of a tubular body (33) constituting said water-steam passage(36) satisfies the following equation:

$$A_3 : A_4 = ( 1 / \alpha_c ) : ( \delta_2 / \lambda_2 )$$

wherein $A_3$ represents an exhaust gas contacting surface area, $A_4$ an outer surface area of the tubular body(33) constituting the water-steam passage (36), $\alpha_c$ the heat transfer coefficient of the steam, $\delta_2$ the thickness of said tabular body(33) constituting said water-steam passage(36), and $\lambda_2$ the heat conductivity of the material of said second stage heat exchanger(6).

6. A heat exchange apparatus according to Claim 1, wherein tubular bodies(22, 33) constituting said first and second casings(2, 7), said first and second exhaust gas passages(28, 29), said steam passage (35) and said water-steam passage(36) are formed out of a ceramic material of a high heat conductivity, such as SiC or AlN.

7. A gas engine provided with a heat exchange apparatus, comprising a fuel supply unit(13) adapted to supply a gas fuel from a fuel tank(11) to a combustion chamber(1A, 1B), a turbocharger(3)-carrying energy recovery unit(10) provided in an exhaust passage(8) through which an exhaust gas from said combustion chamber(1A, 1B) is discharged, a first stage heat exchanger(4) provided in the portion of said exhaust passage(8) which is on the downstream side of said turbocharger(3), and adapted to heat steam with the exhaust gas, and second stage heat exchanger(6) provided in the portion of said exhaust passage(8) which is on the downstream side of said first stage heat exchanger (4), and adapted to heat the water with the exhaust gas from said first stage heat exchanger(4) and convert the same into steam, said first stage heat exchanger(4) comprising a steam passage(35) provided in a first casing(2) and provided with first porous ceramic members (38), and a first exhaust passage(28), in which the exhaust gas flows, provided in said stream passage(35), the steam heated in said second stage heat exchanger(6) flowing in said steam passage(35), said second stage heat exchanger(6) comprising a water-steam passage(36) provided in a second casing(7) formed adjacently to said first casing(2), and capable of storing water therein, and a second exhaust gas passage(29) formed around said water-steam passage(36) and provided with second porous ceramic members(42) therein, the exhaust gas discharged from said first stage heat exchanger(4) flowing in said second exhaust gas passage(29), a steam turbine(5) being driven by the steam occurring in said first stage, the water discharged from said steam turbine(5) being converted into steam in said second stage heat exchanger (6), said steam being supplied to said first stage heat exchanger(4).

8. A gas engine provided with a heat exchange apparatus according to Claim 7, wherein said steam turbine(5) driven by the high-temperature steam occurring in said first stage heat exchanger(4) generates power by a generator(20) provided in said steam turbine(5).

9. A gas engine provided with a heat exchange apparatus according to Claim 18, wherein said second stage heat exchanger(6) is adapted to heat said water with the exhaust gas which has passed through said first stage heat exchanger(4) and convert the same into steam, the steam from said second stage heat exchanger (6) being sent to said first stage heat exchanger(4) and heated to a higher temperature.

10. A heat exchanger comprising casings(7) incorporated in an exhaust passage(8) in which an exhaust gas flows, partition walls(33) arranged in said casings(7), a low-temperature side passage(36), in which a low-temperature fluid flows, formed on the inner side of said partition walls(33), and a high-temperature side passage(29), in which a high-temperature exhaust gas flows, formed in the portions of said casings(7) which are on the outer side of said partition walls(33), said fluid being heated with the exhaust gas, porous ceramic members(38) being provided in said low-temperature side passage(36) and said high-temperature side passage(29), reinforcing members(39) formed by mixing a fibrous material in a ceramic material being arranged in said porous ceramic members(38, 42).

11. A heat exchanger according to Claim 10, wherein said reinforcing members(39) comprise fins extending radially from the inner and outer surfaces of said partition walls(33) into said porous ceramic members(38, 42).

**12.** A heat exchanger according to Claim 10, wherein said reinforcing members(39) comprise core portions of silicon carbide fibers or carbon fibers, and outer portions of silicon carbide.

**13.** A heat exchanger according to Claim 10, wherein said reinforcing members(39) provided in said high-temperature side passage(29) in which an exhaust gas flows comprise core portions of nonwoven cloths of carbon fibers, and $Si_3N_4$ layers formed by spreading a slurry, which is obtained by mixing Si powder with carbon powder, into said core portions, coating the surfaces of said core portions with said slurry, and sintering the resultant products in a $N_2$ gas at a temperature of around 1500°C- 1700°C, said carbon fibers in said core portions being coated with said $Si_3N_4$ layers.

**14.** A heat exchanger according to Claim 10, wherein said reinforcing members(39) constituting said high-temperature side passage(29) in which the exhaust gas flows comprise a composite material containing carbon fibers and silicon nitride, the surface of said complex material being coated with silicon carbide.

**15.** A heat exchanger according to Claim 10, wherein said porous ceramic members(38, 42) comprise silicon nitride, the surface of said silicon nitride being coated with silicon carbide.

**16.** A heat exchanger according to Claim 10, wherein said porous ceramic members(38) provided in said low-temperature side passage(36) in which the water and steam constituting said fluid flows comprise silicon carbide or silicon nitride coated with silicon carbide.

**17.** A heat exchanger according to Claim 10, wherein said porous ceramic members(42) provided in said high-temperature side passage(29) in which the exhaust gas flows comprise silicon nitride.

**18.** A heat exchanger according to Claim 10, wherein said partition walls(33) along which the exhaust gas flows comprise wall core portions of nonwoven cloths of carbon fibers, and silicon nitride layers formed by spreading a slurry, which is obtained by mixing Si powder with carbon powder, into said wall core portions, coating the surfaces of said wall core portions with said slurry, and sintering the resultant products in a $N_2$ gas at a temperature of around 1500°C- 1700°C, said carbon fibers being coated with said silicon nitride.

**19.** A heat exchanger according to Claim 10, wherein said exhaust passage is a passage to which the exhaust gas occurring in an engine is discharged.

**20.** A heat exchanger according to Claim 19, wherein said heat exchanger is provided in the portion of said exhaust passage(8), to which the exhaust gas from an engine(1) is discharged, which is on the downstream side of a turbocharger(3).

## F I G. 1

## F I G. 2

# F I G. 3

# FIG. 4

## F I G. 5

## F I G. 6